# FASCICULE DE BREVET EUROPEEN

(11) **EP 0 520 886 B1**
(45) Date de publication et mention de la délivrance du brevet: **26.08.1998**
(21) Numéro de dépôt: 92401778.3
(22) Date de dépôt: 25.06.1992
(51) Int. Cl.: C03B 23/03, C03B 23/035

(54) **Procédé et dispositif de bombage d'une feuille de verre**
Verfahren und Vorrichtung zum Biegen einer Glasscheibe
Method and apparatus for bending a sheet of glass

(30) Priorité: 27.06.1991 FR 9107933
(43) Date de publication de la demande: 30.12.1992
(73) Titulaire: SAINT-GOBAIN VITRAGE, 92400 Courbevoie (FR)
(72) Inventeur: Lesage, Jean-Luc, F-60200 COMPIèGNE (FR); Borderiou, Arnaud, F-60200 COMPIéGNE (FR); Douche, Jean-Pierre, F-60150 Le Plessis Brion (FR); Watin, Marc, F-02410 Saint-Gobain (FR); Petitcollin, Jean-Marc, F-60150 Thourotte (FR)
(74) Mandataire: Menes, Catherine

(56) Documents cités:
- EP-A- 0 451 010
- WO-A-89/10330
- DE-A- 2 400 296
- FR-A- 2 528 819
- GB-A- 1 116 130
- US-A- 3 682 613
- US-A- 4 229 200
- US-A- 4 596 592
- US-A- 4 612 031

## Description

L'invention a trait aux techniques de bombage de feuilles de verre et plus précisément à celles de ces techniques qui opèrent avec des feuilles de verre évoluant dans des plans sensiblement horizontaux et qui comportent une phase de mise en forme par pressage. L'invention s'applique notamment à la production industrielle des vitrages automobiles tels que les vitrages bombés et trempés - équipant le plus souvent l'arrière et les côtés du véhicule - ou bombés, ou encore tels que les vitrages recuits et feuilletés, c'est-à-dire munis sur une face d'une feuille de matière plastique ou assemblés par paire au moyen d'une feuille de matière plastique, destinés le plus souvent à servir de pare-brise.

La plupart des vitrages automobiles sont des vitrages bombés qui doivent respecter des normes de qualité optique particulièrement sévères et satisfaire très exactement un galbe prédéfini, tant sur les bords pour permettre par exemple l'encapsulation du vitrage dans un cadre surmoulé que sur le reste de la surface car les volumes doivent le cas échéant pouvoir passer dans une fente étroite ou être appariés pour former des double-vitrages isolants.

On connaît nombre de dispositifs de bombage d'une feuille de verre en position horizontale comportant un pressage entre deux formes de bombage complémentaires, généralement une forme pleine et une contreforme annulaire. Dans une première approche, tous ces dispositifs peuvent être classés dans deux familles qui diffèrent fondamentalement par la conception du poste de bombage. Dans la première famille, ce poste est simplement placé à l'extrémité du four servant à réchauffer les feuilles de verre au-delà de leur température de ramollissement, tous les outils de bombage étant à température ambiante à l'exception des pièces en contact avec le verre chaud. Le grand avantage de cette option est qu'elle simplifie beaucoup le problème de la conception des outillages, de leur réglage et de leur remplacement lors d'un changement de fabrication néanmoins, cet avantage est au prix d'un refroidissement inéluctable du verre pendant toute la durée de l'opération de bombage. Pour autant, la température du verre après bombage doit généralement être encore suffisamment élevée pour autoriser une trempe thermique. De toute façon, la capacité d'un verre à se déformer à une vitesse donnée est très largement dépendante de sa température, aussi plus le verre se refroidit et moins il est possible de le bomber, ce qui est d'autant plus gênant ici que cette capacité à se déformer est également inversement liée à la courbure déjà acquise de sorte que toutes les difficultés se trouvent cumulées en fin d'opération. Procéder hors four conduit donc à surchauffer les feuilles de verre dans celui-ci, ce qui augmente les risques de déformations optiques et dans tous les cas à faire primer les problèmes d'outillage sur les problèmes liés au verre et au respect de sa qualité optique.

La seconde famille des dispositifs de bombage à plat est celle des dispositifs dits isothermes où le poste de bombage est placé dans une enceinte chaude, fermée, où la température ambiante est voisine de la température de formage du verre donc comprise entre 600 et 750°C. Par la suite, ces dispositifs seront également désignés par l'expression "dispositifs de bombage dans le four", même si dans la réalité des faits, le bombage s'effectue non dans le four mais dans une enceinte chauffée. Cette option a le mérite de considérer avant tout le produit final et non les outils servant à sa production ; ainsi il est possible de bomber des feuilles de verre avec des températures de sortie de four sensiblement moindres que dans le cas précédent - il n'est plus nécessaire de surchauffer le verre pour compenser les déperditions thermiques lors du bombage - ce qui est très généralement favorable du point de vue de la qualité optique. Par ailleurs, la minceur des feuilles de verre, facteur limitant en cas de refroidissement possible pendant le bombage, n'est pas aussi critique que précédemment.

Mais il va de soi que cet avantage est au prix d'une conception de l'ensemble du dispositif de formage et notamment des outillages bien plus difficile. Le premier problème qui se pose est celui du transfert de la feuille de verre du four à la presse de bombage - ou ce qui revient finalement au même - celui de son évacuation étant entendu que le choix d'une ligne horizontale est en premier lieu dicté par la volonté d'écarter toutes pinces ou autres instruments qui agissent de façon localisée et par conséquent laissent toujours des marques indélébiles sur le vitrage.

Une première solution est d'alimenter la presse par un plateau aspirant faisant un mouvement de va-et-vient entre l'extrémité du four et la presse, la feuille de verre étant déposée sur la forme inférieure qui est elle-même translatée pour venir se placer en regard de la contreforme supérieure de bombage (EP-A-183 418). Mais la précision du bombage suppose une grande maîtrise de ces différents déplacements latéraux, maîtrise - qui à haute température - est difficile à réaliser avec une grande régularité, surtout si une précision de l'ordre du dixième de millimètre est souhaitée ce qui est le cas des formes de vitrages les plus complexes.

Une autre solution est de prolonger le convoyeur véhiculant les feuilles de verre jusqu'au lieu où s'effectue le pressage. Dans ce cas, il a été proposé de soulever la feuille de verre, par exemple au moyen d'une aspiration et de courants gazeux chauds ascendants, pour la faire venir au contact de la forme supérieure qui est alors remontée, ce qui laisse entre le convoyeur d'amenée des feuilles de verre et la forme supérieure un espace suffisant pour permettre d'introduire un cadre inférieur. Après un pressage au moyen de ce cadre, la feuille de verre est à nouveau prise en charge par la forme supérieure jusqu'à ce qu'elle soit récupérée par un cadre de trempe (EP-A-237 231). A froid, une autre possibilité, telle que décrite dans le document EP-A-394 366, est de faire passer le cadre de pressage inférieur au travers du convoyeur, soit que le cadre soit formé d'une série de segments entre lesquels peuvent se loger les rouleaux du convoyeur, soit que ces rouleaux eux-mêmes comprennent des décrochés fournissant un logement en position de repos au cadre de pressage, soit encore que les rouleaux eux-mêmes sont segmentés. Mais il faut noter qu'un cadre segmenté tend à favoriser le marquage de verre, la feuille n'étant pas soutenue uniformément sur son pourtour et que les deux autres variantes -rouleaux avec décrochés ou segmentés - posent d'énormes problèmes de réalisation et de conception des entraînements des rouleaux, problèmes non résolus à ce jour pour les températures élevées.

Enfin, il a été proposé dans le brevet US-A-3 869 271 un procédé de formage par dépression dans lequel le verre est déplacé au travers du four par un coussin d'air puis pénètre dans la zone de formage hors enceinte chaude où il est soutenu par un second coussin d'air entouré par un cadre de pressage monté en porte-à-faux et situé juste sous une forme supérieure concave. La feuille de verre vient s'immobiliser au-dessus du cadre de pressage abaissé sous le plan du coussin d'air. Le cadre de pressage remonte et vient plaquer la feuille de verre contre la forme supérieure de bombage. Pour éviter qu'une large portion de la feuille de verre ne se trouve sans soutien lors du transfert du premier coussin d'air au coussin d'air de la zone de formage, on dispose dans la zone intercalaire des tronçons de rouleaux destinés à éviter un affaissement par gravité.

Là encore, il doit être souligné que le dispositif de pressage est en zone froide. Par ailleurs, dans le cas que nous venons d'évoquer, la feuille de verre est soutenue dans la zone de pressage par un coussin d'air situé à l'intérieur du cadre de pressage. En pratique, une telle disposition n'est permise que si les dimensions de la feuille de verre plane ne diffèrent pas trop de celles du cadre donc de la feuille de verre bombée autrement dit, si la courbure conférée reste faible. Dans le cas contraire, il est nécessaire de prévoir un autre coussin d'air entourant le cadre ce qui complique encore largement les problèmes de réglage des outils, l'équilibrage d'un coussin d'air segmenté étant particulièrement difficile. Par ailleurs, contrôler la trajectoire d'une feuille de verre en mouvement sur un convoyeur est de fait une opération délicate car deux feuilles de verre se succédant peuvent avoir des trajectoires s'écartant l'une de l'autre de plusieurs centimètres. Ces écarts de trajectoires sont difficilement conciliables avec les impératifs conjugués d'une qualité optique élevée et d'une grande précision du galbe. Pour compenser ces écarts, on peut certes utiliser un organe de recentrage comme décrit par exemple dans le brevet US-A-4 233 049 mais cela alourdit le dispositif.

Par ailleurs ce centrage de la feuille de verre n'a de sens que si les deux formes de pressage sont bien en coïncidence. Or dans le document précité, la contreforme annulaire est en porte-à-faux alors que la forme supérieure est suspendue. Il en résulte des écarts de positionnement difficiles à compenser et qui seraient encore plus gênants si les outils étaient placés en zone chaude - sans même compter sur la difficulté triviale mais néanmoins bien réelle due à ce que l'accessibilité et le simple contrôle visuel sont bien moins aisés dès lors que la zone de bombage est close par des parois latérales.

L'invention a pour but un développement des technologies de bombage de feuilles de verre par pressage en zone chaude visant à l'augmentation des cadences de production et du taux de marche avec une réduction des temps d'arrêt de production et notamment ceux dus aux réglages entre deux changements de production, ceci quelle que soit la complexité des vitrages et en respectant les exigences de qualité les plus hautes.

Ce but est atteint conformément à l'invention par un procédé de bombage d'une feuille de verre chauffée à température de bombage, dans un four horizontal, qu'elle traverse véhiculée par un convoyeur à rouleaux moteurs qui la conduit dans une cellule de bombage où est maintenue une température ambiante sensiblement identique à la température de bombage de la feuille de verre. Conformément à l'invention, la feuille de verre vient s'immobiliser dans la cellule de bombage sous une forme supérieure de bombage et à l'aplomb d'une contreforme annulaire entourant un unique moyen de supportage de la feuille de verre, ledit moyen de supportage étant non moteur et agissant sur la partie centrale de la feuille de verre dans la cellule de bombage, et ladite contreforme annulaire étant soulevée pour venir presser la feuille de verre contre la forme supérieure de bombage. L'expression 〈〈 unique moyen de supportage de la feuille de verre 〉〉 signifie selon l'invention qu'il n'existe pas de moyen de supportage de la feuille de verre autre que celui entouré par la contreforme annulaire.

Le procédé de bombage selon l'invention se distingue des procédés connus de l'art en premier lieu par l'emploi en zone chaude de formage d'un moyen de supportage de la feuille de verre qui est simplement destiné à la soutenir sans pour autant la convoyer. La feuille de verre poursuit sa course essentiellement du fait de son inertie et de la vitesse acquise sur le convoyeur à rouleaux. A titre de moyen de supportage, on peut utiliser des rouleaux montés en libre rotation, de préférence sur coussins d'air, les rouleaux n'étant pas entraînés. Des paliers à coussins d'air pouvant convenir dans ce but sont par exemple décrits dans la demande de brevet EP-A-310 500.

Dans une variante plus particulièrement préférée de l'invention, le moyen de supportage est un coussin d'air. Dans ce cas, en effet, l'absence de frottement du verre sur le coussin d'air permet de maîtriser la position de la feuille de verre dès lors qu'elle est encore en contact avec un des rouleaux du convoyeur d'amenée.

De préférence encore, les feuilles de verre sont orientées transversalement et avancent "pointe en avant", donc dans le cas d'un vitrage trapézoïdal avec leurs grandes bases à l'arrière, parallèles aux rouleaux du convoyeur d'amenée. De cette façon, la feuille de verre peut être focalisée au moyen de butées latérales fixes - ou du moins maintenues fixes pendant toute l'opération de centrage. Le coussin d'air permet aux feuilles de verre de glisser sans frotter donc sans marquage. Ainsi, il suffit que les feuilles de verre s'engagent entre les deux premières butées latérales - les plus espacées car correspondant à l'arrière du vitrage - pour que la feuille de verre se centre d'elle-même.

La focalisation de la feuille de verre peut, le cas échéant, être complétée par des butées frontales. Dans tous les cas, il y a avantage à prévoir une légère inclinaison vers le bas du moyen de supportage de manière à ce que la feuille de verre soit bien arrêtée en position extrême et n'est pas tendance à reculer légèrement après son choc contre les butées de focalisation.

Ce moyen de supportage de la feuille de verre est entouré par la contreforme annulaire qui peut donc être réalisée sous la forme d'un rail continu éventuellement pourvu d'éléments articulés. La contreforme annulaire est déplacée de haut en bas pour venir se loger dans une position d'attente permettant le passage de la feuille de verre et de bas en haut pour venir presser cette dernière et l'appliquer contre la forme supérieure de bombage.

Moyen de supportage et contreforme annulaire constituent de préférence un ensemble porté par une platine commune montée elle hors de l'enceinte chaude, ils constituent ainsi un ensemble commun pouvant être remplacé d'un seul bloc. Le premier avantage d'une telle disposition est qu'elle garantit le parfait centrage de la contreforme annulaire par rapport au coussin d'air. Par ailleurs, la platine supporte également tout le système de motorisation qui peut ainsi comporter des pièces réputées fragiles comme les connexions électriques ou les arrivées d'air comprimé, les dispositifs mécaniques de précision, les actionneurs mécaniques ou hydrauliques.

Dans une variante plus particulièrement préférée de l'invention, l'ensemble de pressage, à savoir la forme supérieure de bombage et la contreforme annulaire, est fermé, indexé, lors de leurs phases de montée en températures. Cette disposition conduit là encore à raccourcir les temps de réglage. De ce fait, les deux formes sont déjà placées correctement à froid et vont le rester tout le temps du chauffage.

Par ailleurs, il va de soi que pour conserver une bonne reproductibilité du formage, cet indexage est répété à chaque opération de pressage ce qui permet de rattraper les écarts très faibles qui pourraient encore se produire.

Les zones marginales de la feuille de verre débordent du coussin d'air et ne sont donc pas soutenues. Le plus souvent ceci est sans effet car du fait de l'absence de refroidissement du verre dans la cellule de bombage, la feuille de verre n'a pas besoin d'être surchauffée dans le four ce qui limite la tendance à l'affaissement des bords. Toutefois, dans le cas d'un bombage exceptionnellement profond, ce problème peut devenir critique. Pour y remédier, il peut alors être prévu un soufflage d'air chaud afin de prolonger l'action du coussin d'air par exemple au moyen de rampes de soufflage montées sur l'équipage supportant la contreforme annulaire. Eventuellement, on peut utiliser ces mêmes rampes ou d'autres rampes alimentées avec des pressions relativement importantes par exemple supérieures à 784 Pa (80 mm de colonne d'eau), de façon à contribuer à la prise en charge de la feuille de verre par la forme supérieure de bombage.

L'invention a également pour objet un dispositif permettant la mise en oeuvre du procédé de bombage de feuilles de verre évoqué plus haut comportant un four horizontal, comportant lui-même un convoyeur à rouleaux moteurs, terminé par une cellule de bombage où est maintenue une température voisine de la température de bombage de la feuille de verre comportant une forme supérieure de bombage munie de moyens propres à maintenir une feuille de verre en contact avec ladite forme supérieure de bombage et un ensemble inférieur constitué d'un moyen non moteur de supportage de la partie centrale de la feuille de verre et d'une contreforme annulaire entourant cet unique moyen de supportage de la feuille de verre. Cette contreforme et le moyen de supportage de la partie centrale de la feuille de verre sont montés sur une platine portant également des éléments isolants venant fermer le fond de la cellule de bombage et divers éléments placés ainsi hors de la zone chaude de la cellule notamment les éléments de motorisation de la contreforme annulaire. Dans une telle installation, c'est donc toute la partie basse de la cellule de bombage qui est sortie à chaque changement de fabrication de sorte que la ligne de fabrication acquiert la souplesse d'une ligne à froid tout en préservant les avantages d'un bombage en zone chaude. Grâce aux éléments isolants, on peut maintenir sous la ligne une température suffisamment basse pour permettre des interventions humaines sans dangers.

Pour simplifier les changements de production, il est préférable de monter tout cet ensemble inférieur sur un chariot qui est mis en place en roulant sur des rails. Cet effet est encore renforcé si on utilise ce chariot pour amener simultanément une nouvelle forme supérieure de bombage qui est alors fixée à l'unité d'aspiration à la manière d'un tiroir.

L'efficacité de la presse de bombage est avantageusement renforcée par une homogénéité des matériaux, forme supérieure de bombage et contreforme annulaire étant réalisées dans des matériaux identiques ou du moins présentant des caractéristiques de dilatation identiques, ce qui permet d'extrapoler à chaud la conception des outils à froid et de garantir un bon parallélisme des formes de la presse de bombage. Ces outils seront obtenus par exemple par coulée et usinage d'une même fonte ou acier réfractaire. Les systèmes d'indexage ou autres pièces faisant partie de l'outillage, comme les butées de focalisation du volume, font directement partie de ces outils dès le stade de la coulée ou sont rapportés mais alors avec une grande précision d'usinage. De plus, le dispositif comporte avantageusement des moyens de mesure de l'entrefer entre la forme supérieure de bombage et la contreforme annulaire, les vérins actionnant la contreforme annulaire étant asservis à ces moyens de mesure pour un parfait réglage de l'assiette de la presse de bombage.

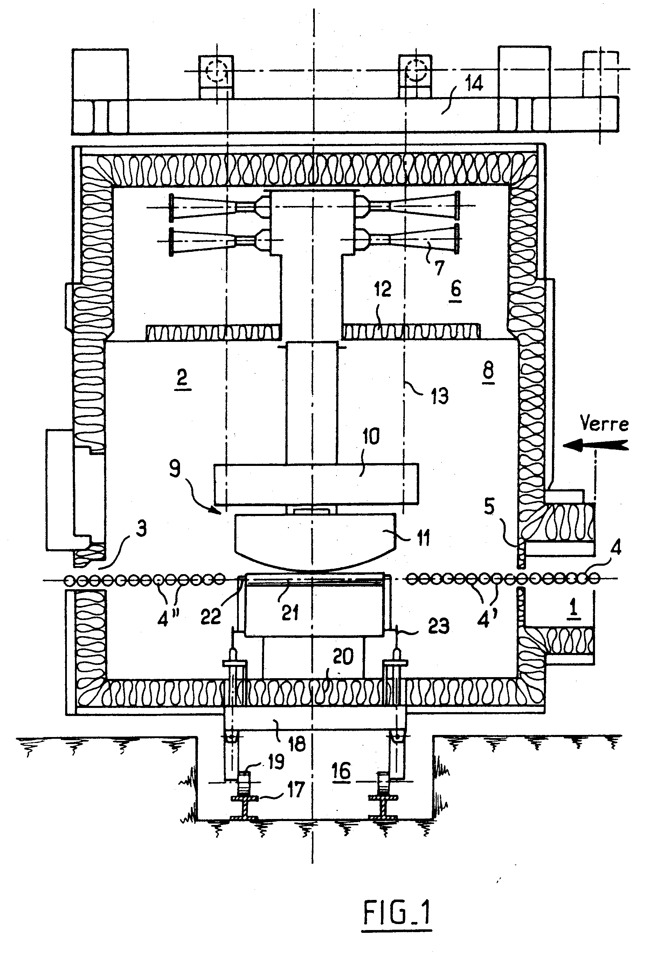

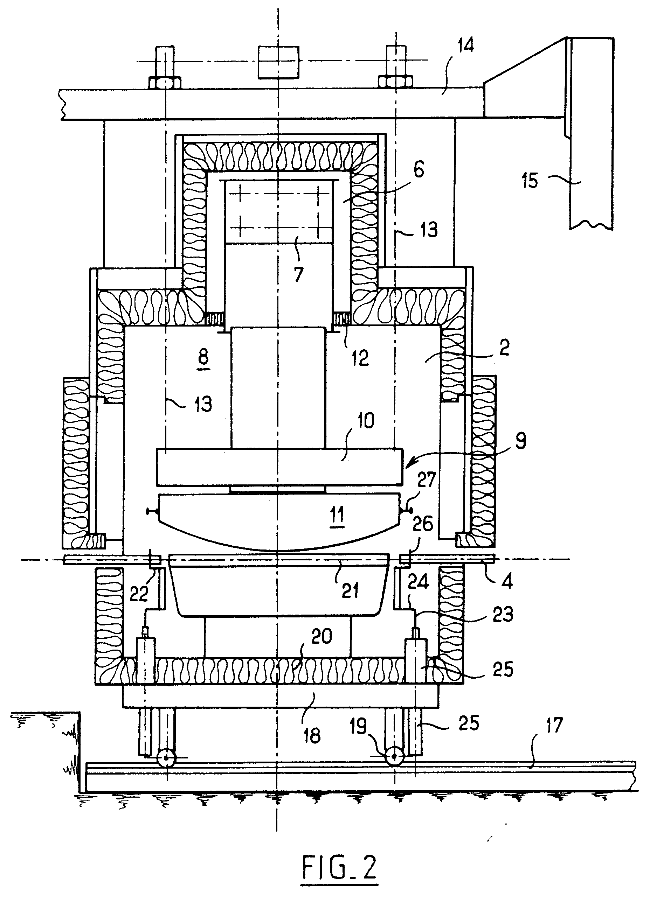

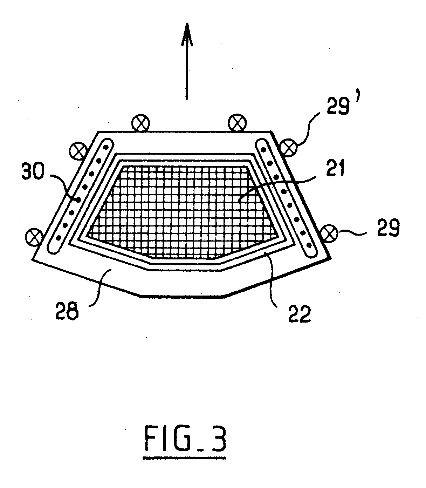

D'autres détails et caractéristiques avantageuses de l'invention ressortent de la description faite ci-après en référence aux dessins annexés qui représentent :
. **figure 1** : un schéma en vue de côté d'une forme de bombage selon l'invention,
. **figure 2** : le dispositif de bombage de la figure 1 vu de face,
. **figure 3** : une vue de dessus d'une feuille de verre centrée au-dessus d'une contreforme annulaire selon l'invention.

Le dispositif de bombage selon l'invention représenté aux figures 1 et 2 comporte, de droite à gauche sur la figure 1, un four 1 dont seule l'extrémité terminale est ici figurée, une cellule de bombage 2 et une sortie 3 en direction du dispositif de refroidissement. Ce four 1 est de préférence un four électrique présentant les caractéristiques enseignées par la demande de brevet européen 91.400450.2 déposée le 20 février 1991 au nom de la demanderesse ou en tout état de cause un four muni de moyens pour chauffer la feuille de verre à la température de bombage avec éventuellement des zones surchauffées bien localisées correspondant par exemple aux lignes de pliure. Dans ce four, la feuille de verre est convoyée par un ensemble de rouleaux moteurs 4 par exemple en silice ou autre céramique réfractaire. Ces rouleaux sont de préférence revêtus d'une gaine en tissu de silice qui minimise les risques de marquage.

Ce convoyeur se prolonge jusqu'à la cellule de bombage (rouleau 4′), enceinte isolée thermiquement où est maintenue une température de l'ordre de la température de bombage des feuilles de verre, typiquement de l'ordre de 650°C lorsqu'une trempe thermique est prévue et de l'ordre de 550°C pour un recuit ultérieur. Un rideau 5 est éventuellement utilisé pour éviter des courants d'air parasites qui pourraient être générés par exemple lors des enfournements. Dans la zone de formage proprement dite, le convoyeur est interrompu, toutefois, de nouveaux rouleaux 4˝ sont disposés dans le même alignement de l'autre côté de cette zone pour permettre d'évacuer, le cas échéant, un volume non traité, l'évacuation de celui-ci étant favorisée par un système de racles ou balais entraînant les volumes mauvais hors de la zone de l'organe de supportage par exemple vers un dispositif de casse à l'eau.

La partie haute de la cellule de bombage est constituée de deux zones isolées thermiquement. La zone supérieure 6 rétrécie constitue la zone d'aspiration, cette aspiration s'effectuant par les trompes 7, l'air moteur chaud provient du four de réchauffage des feuilles de verre. Dans la zone inférieure 8 se trouve l'ensemble supérieur 9 de la presse de bombage constitué essentiellement d'un porte outillage 10 où vient se loger entre des coulisses un caisson sans fond 11 entourant la forme supérieure de bombage. L'aspiration par les trompes 7 permet de placer ce caisson sous dépression de façon à créer une force d'aspiration agissant sur la périphérie de la feuille de verre, cette dernière solution est préférée à la solution d'une forme aspirante percée, car la force agissant sur la feuille de verre est maximale près des bords, là où s'effectue généralement le pliage du volume et de plus, il n'y a pas de risque de marquer le verre au niveau des orifices de succion et l'aspiration périphérique laisse une plus grande liberté quant au choix du revêtement protecteur de la forme supérieure de bombage.

Les zones inférieures et supérieures, séparées par une paroi d'isolation thermique 12, sont reliées par le conduit d'aspiration et également par au moins un orifice de réinjection d'une partie au moins de l'air aspiré. Au moment de cette réinjection, l'air est de préférence réchauffé, par exemple par des résistances électriques ou autres moyens de chauffage équivalents, ceci pour compenser le refroidissement qui se produit lors de la détente due à l'aspiration et éventuellement les températures un peu "froides" de l'air comprimé servant d'air moteur des trompes et préchauffé par un passage de son circuit dans le four, de sorte que l'ambiance dans la zone inférieure de la cellule de bombage est ainsi parfaitement contrôlée en température. Par ailleurs la zone supérieure comporte une cheminée par laquelle est évacuée éventuellement l'excès d'air chaud provenant du four ce qui évite d'être en surpression dans la zone supérieure et permet ainsi une bonne régulation de la pression dans la zone d'aspiration. De plus, l'isolation de la zone inférieure réduit la taille de la partie "active" de la cellule de bombage et simplifie ainsi les problèmes de conditionnement en températures.

La partie haute que nous venons de décrire présente également un avantage important plus particulièrement visible sur la vue de face de l'installation, à savoir que les organes qui permettent de manoeuvrer le porte-outillage afin d'effectuer les mouvements de montée-baisse de la forme supérieure, peuvent passer sur les côtés de la zone supérieure d'aspiration, à l'air froid hors de la cellule. Il faut en effet noter que la température élevée de la zone de formage interdit l'emploi de chaînes dans cette zone. Le porte-outillage doit donc être manoeuvré par des tirants 13, eux-mêmes rattachés à des chaînes qui s'enroulent sur des poulies devant être placées obligatoirement au-dessus de la voûte de la cellule de bombage, à une distance au moins égale à la course des tirants 13. Dans le cas de l'invention, le passage sur les côtés permet d'abaisser la poutre 14 de la charpente 15 juste esquissée sur les figures 1 et 2, ce qui réduit les coûts du dispositif et surtout son encombrement. Ce bon contrôle de la température et de la pression dans la cellule de bombage évite d'avoir à compenser des phénomènes de refroidissement par des courants convectifs au moyen de dispositifs de chauffage par rayonnement, dispositifs par rayonnement qui tendent à surchauffer les outils et tissus et accélèrent donc leur vieillissement.

A noter qu'une telle partie haute de la cellule de bombage peut très bien être utilisée hors du cadre spécifique de la présente invention dans tous les cas où un mécanisme d'aspiration ou de reprise d'air est associé à une forme supérieure de bombage.

Venons-en maintenant à la partie basse de la cellule de bombage. Cette partie basse surplombe une fosse 16 au fond de laquelle s'étendent des rails 17, disposés parallèlement aux rouleaux et au moyen desquels on vient mettre en place la partie inférieure de la presse de bombage. Cette fosse 16 est à une température proche de l'ambiante même si, la proximité avec la cellule de bombage entraîne un léger échauffement. Les rails 17 restent ainsi froids ce qui assure un positionnement simple et précis de la partie inférieure de la cellule. Cette partie inférieure comporte une platine 18 portée par un chariot ou munie directement de roues 19. Cette platine 18 porte un élément isolant 20, la dalle-support 21 du coussin d'air et la contreforme annulaire 22.

L'élément isolant 20 vient s'encastrer et fermer le fond de la cellule qui doit être isolée pour un fonctionnement isotherme. Lorsque l'ensemble inférieur est retiré, le fond est de préférence refermé par un obturateur par exemple du type volets ou rideaux métalliques, ici non représentés, et évitant des pertes thermiques trop importantes. De plus, il est prévu des éléments d'étanchéité à la jonction entre l'élément isolant et le fond fixe de la cellule de bombage.

L'élément principal de la partie inférieure de la presse est constitué par la contreforme annulaire 22 portée par un chassis 23 dont les dimensions sont avantageusement calculées en fonction de la taille maximum des vitrages à traiter, une plaque de liaison 24 servant pour la fixation de la contreforme 22 sur le chassis 23. Les mouvements de montée-baisse du chassis 23 et par là de la contreforme 22 sont assurés par au moins trois et de préférence quatre vis motorisées 25 qui traversent la platine 18 et travaillent donc en grande partie, à froid ce qui est un gage de bon fonctionnement. Les vis motorisées 25 permettent également d'assurer les réglages de l'assiette de la contreforme annulaire, en phase de réglage et surtout lors de la phase de pressage comme il sera expliqué de façon plus détaillée plus loin.

Dans le cas ici représenté, les vérins sont positionnés sous la cellule de bombage et agissent directement sur le cadre annulaire.

La conception de l'outillage et plus particulièrement de ce cadre annulaire doit être réalisée dans l'optique d'une très grande précision du bombage, avec notamment une très grande reproductibilité des formes de vitrage. L'objectif retenu par les inventeurs pour ce point est celui d'une précision de 1/10 de millimètre pour les vitrages, ce qui suppose en fait une précision supérieure au niveau des outillages.

Les défauts induits par le cadre annulaire peuvent être de trois sortes : ceux dus à un problème de concentricité, avec un décalage dans le plan horizontal par rapport à la forme pleine de bombage ; ceux imputables à un mauvais parallélisme des pistes avec alors une forme et une contreforme non complémentaires et enfin ceux liés à des défauts d'assiette.

Dans une installation classique, le cadre annulaire est muni de moyens de réglage permettant de jouer sur sa piste, sur son assiettte et sur sa position dans le plan. Dans ce but, il est par exemple prévu un certain nombre de vis qui, à l'arrière de la piste, permettent de modifier la rectitude de la piste. D'autre part, le cadre annulaire est en fait monté sur un cadre concentrique, lui-même monté sur un autre cadre concentrique ce qui permet, par des jeux de vis et tirants de régler sa concentricité et son assiette. De plus, des index sont montés associés à la forme pleine de bombage. En pratique, le nombre de points de réglage peut atteindre la centaine. Pour procéder à celui-ci, il faut bien sûr procéder à chaud, la solution la plus courante consistant à déposer le long du cadre annulaire des petits tas de terre de potier et à mesurer la hauteur de chacun de ces tas après un pressage. L'opération est lente, réalisée dans des conditions notamment de chaleur assez délicates et surtout conduit à une précision relativement faible et surtout liée à la grande expérience des opérateurs. Une fois ces réglages terminés, l'objectif des opérateurs est de rester au plus près de la position de référence déterminée, en évitant de s'en écarter donc en tentant de reproduire à chaque fois les mêmes mouvements. Là encore, cet objectif s'avère souvent pour partie chimérique et en tout cas, impropre à garantir une précision de bombage de plus de un millimètre.

Dans le cadre de l'invention, le premier choix des inventeurs a été de supprimer toutes les pièces chaudronnées pour ne plus utiliser que des pièces en fonte moulées et/ou usinées, et stabilisées thermiquement les unes par rapport aux autres. Anneau de bombage, forme supérieure et index sont ainsi réalisés dans un même matériau, ou dans des matériaux ayant des caractéristiques de comportement à chaud identiques, avec les mêmes plans notamment avec à la base la même CAO (conception assistée par ordinateur) pour le cadre annulaire et la forme de bombage. Dans la mesure où le procédé de bombage selon l'invention suppose des conditions thermiques identiques pour toutes ces pièces placées à demeure dans l'enceinte isolée thermiquement de la cellule de bombage, on a alors la garantie, dans ces conditions, d'un parfait parallélisme originel des pistes, sans nécessiter plus de réglage. Si le procédé de bombage prévoit un refroidissement du cadre annulaire, notamment si celui-ci sert au transport des feuilles de verre bombées hors de l'enceinte de bombage et plus encore, sert de support aux feuilles de verre pendant la trempe, on choisira de préférence des matériaux différents mais qui, chacun dans son domaine respectif de températures de travail, se comportent de manière identique.

Comme indiqué plus haut, les systèmes d'indexage font eux-mêmes partie intégrante des outillages et vont eux-aussi avoir un même comportement à chaud. Leur réglage, et par là celui de la concentricité du cadre annulaire par rapport à la forme supérieure de bombage peut ainsi être réalisé à froid, une fois pour toute.

Le dernière réglage mentionné concerne l'assiette. Dans les installations connues de l'art, ce réglage concerne uniquement le cadre annulaire. Mais en fait, il faut noter que la forme supérieure est suspendue à des tirants dont on peut, le cas échéant, allonger par rapport aux autres de sorte que, en dépit de son poids très élevée, l'assiette de la forme supérieure de bombage peut se modifer, de sorte que, même un réglage parfait de l'assiette du cadre annulaire conduit à un mauvais résultat.

Selon une variante préférée de l'invention, on ne cherche pas à régler l'assiette de la contre-forme et/ou de la forme en référence à une position absolue et notamment à l'horizontale, mais à imposer un entrefer précis entre la contre-forme et la forme. Pour ce faire, on utilise au moins trois et de préférence quatre vérins ou autres moyens de levage indépendants dont les mouvements sont asservis dans la phase finale d'approche à des capteurs.

Ces capteurs peuvent être par exemple des capteurs magnéto-strictifs dont la tige sensorielle sera protégée. Il peut être aussi envisagé une triangulation optique. De préférence, on utilisera toutefois des capteurs capacitifs en acier inox qui utilisent alors la forme supérieure métallique comme réflecteur. De tels capteurs capacitifs peuvent avantageusement fonctionner sans protection du type circuit de refroidissement et la précision de leur mesure est très grande jusqu'à environ 10 mm, avec ainsi un maximum de sensibilité dans le domaine de l'invention.

De préférence encore, les moyens commandant les déplacements de la contre-forme annulaire n'agissent pas directement sur celle-ci mais sur le chassis en forme de cadre la supportant. Ces moyens sont par exemple du type vérins ou de façon préférée du type vis motorisées. Ce cadre est de préférence un cadre indéformable - c'est-à-dire qu'il ne peut être modifié par des réglages. Ces bras latéraux traversent de préférence les pieds droits de la cellule de bombage, par des fentes appropriées, ce qui permet notamment de placer les vérins à froid ce qui simplifie notamment les opérations d'entretien. La contre-forme annulaire n'est pas fixée de façon rigide sur celui-ci mais repose par exemple sur des doigts engagés dans des creux du cadre annulaire. Ainsi, le cadre annulaire a encore un certain degré de liberté par rapport au cadre-support aussi, si les vérins ne sont pas tous exactement à la même hauteur, le cadre annulaire ne sera pas déformé. A noter bien sûr que dans ce cas, il n'est pas d'aplomb mais ce défaut d'assiette est ensuite corrigé par l'asservissement de l'entrefer.

Pour éviter que le cadre annulaire simplement posé sur le cadre-support ne tombe dans un tel cas de déséquilibre, il est de plus avantageusement muni d'équerres, qui limitent les déplacements latéraux et aident à la mise en place du cadre-annulaire sur son support.

Pour ce qui concerne le déplacement des vis motorisées, nous avons déjà indiqué qu'en fin de course, ils sont chacun indépendants et asservis à la mesure de l'entrefer. Pour ce qui est du reste de leur course, qui peut représenter par exemple de 200 à 300 mm, alors que la fin de course représente un déplacement de seulement 10 mm, les vis motorisées sont de préférence déplacés de façon synchrone. Pour celà, il est avantageux de prévoir des systèmes mécaniques indépendants - de toute façon nécessaire pour la fin de course - mais dont les consignes sont supervisées. Selon un mode de synchronisation électrocommandée connu, on utilisera par exemple une vis comme leader et on ajustera le déplacement des autres vis par rapport à cette vis leader. Un tel mode de synchronisation permet d'opérer des déplacements à grande vitesse, en sachant que dans cette partie de la course, une grande précision n'est pas nécessaire, des écarts de quelques millimètres étant permis. Dès qu'un des capteurs d'entrefer mesure une distance inférieure au seuil choisi, par exemple 10 mm, les déplacements des vis motorisées sont désynchronisés et on passe sous le mode asservi à l'entrefer.

Comme il ressort de la description faite ci-dessus, dans le cadre de l'invention, on ne cherche absolument pas à obtenir des mouvements exacts, reproductibles mais on garantit une position finale correcte.

La conception d'outillage que nous venons de décrire et plus particulièrement le principe de l'asservissement de l'entrefer peuvent être appliquées à d'autres installations de bombage, à la condition toutefois que la contre-forme annulaire soit bien indéformable, de façon à ce que la position mesurée par les capteurs d'entrefer soit effectivement significative de la position de tous les points de la piste de la contre-forme annulaire. Par ailleurs, l'outillage ici décrit suppose une forme supérieure de bombage immobile avec un déplacement vertical du cadre annulaire pour venir presser la feuille de verre. Il va néanmoins de soi que l'invention s'applique également à des installations avec un cadre annulaire non déplacé verticalement mais où la forme supérieure de bombage est descendue ou encore à des installations où les deux éléments de la presse sont rapprochés les uns des autres.

La contreforme annulaire 22 est de préférence constituée par un rail continu, ce qui limite les risques de marquage de la surface du verre, mais peut également être formée de par exemple trois éléments articulés entre-eux, ceci pour résoudre les problèmes des bombages les plus complexes. Sur la contreforme sont montés des doigts d'indexage 26 qui viennent s'engager dans des fentes ou des oeillets 27 associés à la forme supérieure de la presse de bombage. La forme supérieure, la contreforme et les éléments d'indexage sont tous réalisés dans un même matériau ou du moins dans des matériaux ayant les mêmes caractéristiques de comportement à chaud. On utilisera par exemple une fonte en acier réfractaire, les pièces étant rectifiées après moulage. Par ailleurs, il doit être noté que toutes les pièces destinées à venir en contact avec la feuille de verre sont de préférence munies de revêtement protecteur, par exemple à base de tissu ou tricot en fibres métalliques.

La presse de bombage est ainsi constituée de deux formes dont le parallélisme des pistes est assuré par l'usinage des pièces et des caractéristiques de dilatation identiques, l'assiette de la presse étant contrôlée par l'asservissement à l'entrefer.

Le troisième élément porté par la platine 18 est le coussin d'air ou plus exactement la dalle-support 21. Ce coussin d'air est placé à l'intérieur de la contreforme annulaire et est destiné au soutien du verre dans la zone de formage. La dalle-support - constituée par exemple par une plaque perforée en céramique munie d'orifices de soufflage - est supportée directement par la platine, des moyens de réglage fins permettant de régler son assiette et sa légère inclinaison vers le bas destinée à assurer sa position de focalisation du verre sur les butées.

Ce coussin d'air est bien sûr un coussin d'air chaud, préchauffé et brassé par un ventilateur compte-tenu des débits de plusieurs milliers de mètres cube par heure nécessaires et des pressions de centaines de millimètres de colonne d'eau nécessaires à l'entretien du coussin. Placé seulement au centre de la contreforme et porté par une platine, le coussin d'air peut être aisément réglé de façon à tangenter le convoyeur à rouleaux lors de la prise en charge des feuilles de verre. Pour ce réglage du coussin d'air, on utilisera par exemple une poutre indéformable, par exemple, en céramique, qui repose à la fois sur les rouleaux 4′ en amont de la zone de formage et les rouleaux 4˝ en aval de celle-ci. Sur cette poutre sont montés des capteurs de distance par exemple du même type que ceux utilisés pour la mesure de l'entrefer qui vont servir à régler la hauteur du coussin d'air et son horizontalité. Le coussin d'air ne sert en règle générale qu'à soutenir la feuille de verre dont le mouvement est commandé par le contact de sa partie arrière avec les rouleaux. En pratique, cette commande est parfaitement efficace tant que le verre est en contact avec au moins un rouleau, le coussin d'air n'engendrant pratiquement pas de ralentissement du verre. Néanmoins, il peut être nécessaire de prévoir des moyens pour aider à l'avancement de la feuille de verre tels qu'un soufflage d'air chaud sur la tranche, une orientation de biais de certain des orifices de la dalle-support ou encore une légère pente du coussin d'air.

Il doit être souligné que dans le cas de l'invention, le seul coussin d'air utilisé, l'est dans la zone de formage, ce qui évite nombre d'inconvénients bien connus de l'emploi des coussins d'air. En premier lieu, il est parfaitement possible d'opérer dans le four une chauffe différenciée de la face inférieure de la feuille de verre, car alors celle-ci est soutenue par des rouleaux. D'autre part, la trajectoire de la feuille de verre 28 (voir figure 3) est maîtrisée de manière bien plus satisfaisante avec des rouleaux.

Grâce à ce coussin d'air dans la zone de formage, et des butées de focalisation, on peut rattraper aisément tous les écarts de trajectoire de l'ordre de quelques millimètres dus aux rouleaux du four. Ces butées latérales 29 de focalisation, montées solidaires de la forme supérieure de bombage ou en référence par rapport à celle-ci. En effet, si comme schématisée à la figure 3, la feuille de verre s'avance "pointe en avant", il suffit que son éventuel décalage latéral ne lui interdise pas de s'engager entre les butées de focalisation pour qu'un centrage parfait soit finalement obtenu (en pratique ceci autorise, le plus souvent, un décalage de plusieurs centimètres, ce qui est très largement suffisant). Le verre, encore en contact avec au moins un rouleau 4 qui assure l'entraînement de la feuille, va glisser latéralement sur le coussin d'air sans risquer le moindre dommage.

Avec un tel dispositif, le positionnement de la feuille de verre est donc complètement indépendant du coussin d'air qui constitue purement un moyen de supportage du verre. Par contre, feuille de verre et forme supérieure de bombage sont parfaitement en coïncidence, même si la forme supérieure de bombage se décale par rapport à sa position de référence.

Le deuxième aspect est celui de la mise en référence des deux organes de pressage, mise en référence obtenue par le choix et la qualité des matériaux, l'indexation de la forme supérieure de bombage par rapport à la contreforme annulaire et l'asservissement des vérins déplaçant la contreforme à l'entrefer. Ainsi d'une part, le dispositif est conçu de façon à limiter tous les écarts de positionnement et d'autre part, ceux-ci sont corrigés de manière complète à chaque opération.

A la figure 3 est également schématisé un dispositif pour compenser, le cas échéant, l'affaissement de la partie périphérique de la feuille de verre non soutenue par le coussin d'air. Dans ce cas, la contreforme annulaire est doublée d'une rampe 30 de soufflage d'air chauffé à une température voisine de la température de la feuille ou même surchauffé si cette partie périphérique doit subir un bombage particulièrement important.

Une même installation est le plus souvent amenée à traiter des vitrages de dimensions très différentes. Néanmoins, un même chassis ou cadre 23 est de préférence utilisé pour toutes les dimensions, ce cadre portant des rouleaux de convoyeurs embarqués, entraînés de manière synchrone par rapport aux rouleaux fixes du convoyeur traversant le four. Ces rouleaux embarqués sont de préférence à entraxes réglables pour s'adapter aux différents cas de figures.

A noter également que la platine est de préférence motorisée ce qui permet l'extraction rapide de la partie basse de la presse de bombage, par exemple en vue de son nettoyage si une feuille de verre vient à se briser. Cette extraction peut être synchronisée avec la mise en place d'un dispositif de casse à l'eau venant se substituer par exemple aux rouleaux montés au niveau du seuil de la cellule de bombage, le dispositif de casse à l'eau étant disposé en fosse et soulevé au moment voulu. De la sorte, une casse accidentelle ne se traduit que par la perte de quelques vitrages, sans interruption de la production.

L'installation opère de la façon suivante. La partie inférieure de la presse de bombage est amenée sur les rails, bloquée selon une position de référence. Après connexion des arrivées d'air chaud et éventuellement des arrivées électriques, la forme supérieure est amenée sur la contreforme supérieure et maintenue en position indexée pendant toute la phase de montée en température, de sorte que la presse est en position fermée. Cette position est maintenue pendant toute la phase de montée en températures des différents éléments. Le préchauffage de l'installation terminée, le cycle de bombage peut commencer et la presse est ouverte, la contreforme annulaire étant abaissée sous le niveau de transport de la feuille de verre. Dès que l'arrivée d'un volume est détectée - par exemple par un capteur dont les dispositifs de calcul associés sont de préférence également portés par la platine, à froid - la forme supérieure de bombage est abaissée dans un premier temps à vitesse rapide puis plus lentement en fin de course. La feuille de verre peut ainsi se focaliser par rapport aux butées de ladite forme. Les butées de focalisation sont éventuellement escamotées si nécessaire pendant le déclenchement de l'aspiration périphérique qui vient soulever la feuille de verre. La feuille de verre est ainsi préformée au contact de la forme supérieure de bombage. La contreforme est alors remontée en position de pressage, dans un premier temps avec les 4 vérins actionnés de manière synchronisée, puis en phase finale avec les 4 vérins indépendants asservis à l'entrefer réel entre la forme et la contreforme. Le pressage terminé, la feuille de verre est retenue par aspiration contre la forme supérieure de bombage qui est alors remontée en position haute. Un cadre de transfert - ou tout autre moyen analogue - vient alors chercher la feuille de verre bombée pour la conduire au poste de refroidissement.

L'installation et le procédé de bombage que nous venons de décrire permettent la réalisation de temps de cycles particulièrement courts, avec des changements de fabrication très rapides et des temps de réglage courts, l'ensemble conduisant à une très faible dispersion de la qualité des volumes produits.

## Revendications

1. Procédé de bombage d'une feuille de verre chauffée à température de bombage dans un four (1) horizontal qu'elle traverse véhiculée par un convoyeur à rouleaux moteurs (4) qui la conduit dans une cellule de bombage (2) où est maintenue une température ambiante sensiblement identique à la température de bombage de la feuille de verre, **caractérisé en ce que** la feuille de verre vient s'immobiliser dans la cellule de bombage sous une forme supérieure de bombage à l'aplomb d'une contreforme annulaire entourant un unique moyen de supportage de la feuille de verre, ledit moyen de supportage étant non moteur et agissant sur la partie centrale de la feuille de verre dans la cellule de bombage, **et caractérisé en ce que** ladite contreforme annulaire (22) est soulevée pour venir presser la feuille de verre contre la forme supérieure de bombage.

2. Procédé selon la revendication 1, **caractérisé en ce que** lesdits moyens de supportage sont constitués par des rouleaux montés en libre rotation.

3. Procédé selon la revendication 1, **caractérisé en ce que** lesdits moyens de supportage sont constitués par un coussin d'air chaud.

4. Procédé selon l'une des revendications précédentes, **caractérisé en ce que** la contreforme annulaire et les moyens de supportage sont montés sur une platine (18) placée à l'extérieur de la cellule de bombage.

5. Procédé de bombage selon l'une des revendications précédentes, **caractérisée en ce que** la feuille de verre est déplacée dans le four selon une direction perpendiculaire à un grand côté.

6. Procédé de bombage selon la revendication 5, **caractérisé en ce que** la position d'arrêt de la feuille de verre est déterminée par des butées latérales et éventuellement des butées frontales montées solidaires de la forme supérieure de bombage.

7. Procédé de bombage selon l'une des revendications précédentes, **caractérisé en ce que** l'ensemble de pressage constitué par la forme supérieure de bombage et la contreforme (22) de bombage est fermé lors des phases de montée en températures.

8. Procédé de bombage selon l'une des revendications précédentes, **caractérisé par** un soufflage d'air chaud en direction de portions périphériques de la feuille de verre non soutenues par le coussin d'air chaud.

9. Procédé de bombage selon l'une des revendications précédentes, **caractérisé par** un asservissement de la presse de bombage à la mesure de l'entrefer entre la forme supérieure de bombage et la contreforme annulaire.

10. Procédé de bombage selon l'une des revendications précédentes, **caractérisé en ce que** des moyens sont prévus pour extraire rapidement la platine portant la contreforme annulaire et les moyens de supportage.

11. Procédé de bombage selon l'une des revendications précédentes, **caractérisé par** une aide à l'avancement des feuilles de verre lors de leur déplacement sur le coussin d'air chaud.

12. Procédé de bombage selon l'une des revendications précédentes, **caractérisé en ce que** les moyens de supportage sont légèrement inclinés.

13. Procédé de bombage selon la revendication 11, **caractérisé par** un soufflage d'air chaud sur la tranche de la feuille de verre.

14. Dispositif de bombage d'une feuille de verre comportant un four (1) horizontal, comportant lui-même un convoyeur à rouleaux moteurs (4), terminé par une cellule de bombage (2) où est maintenue une température voisine de la température de bombage de la feuille de verre, caractérisé en ce que ladite cellule (2) comporte une forme supérieure de bombage munie de moyens propres à maintenir une feuille de verre en contact avec ladite forme supérieure de bombage et un ensemble inférieur constitué d'une platine (18) portant le plancher isolant de la cellule de bombage (2), une contreforme annulaire de pressage (22), un unique organe de soutien de la feuille de verre, ledit organe étant non moteur et agissant sur la partie centrale de la feuille de verre dans la cellule de bombage, et un système motorisé de montée-baisse de la contreforme annulaire.

15. Dispositif de bombage selon la revendication 14, **caractérisé en ce que** ledit organe de soutien du verre dans la zone de formage est constitué par une dalle (21) en matériau réfractaire percée d'une série d'orifices au travers desquels est généré un coussin d'air chaud.

16. Dispositif de bombage selon l'une des revendications 14 ou 15, **caractérisé en ce que** ledit ensemble inférieur est monté sur un chariot déplacé sur des rails (17) froids.

17. Dispositif de bombage selon l'une des revendications 14 à 16, **caractérisé par** des rampes de soufflage d'air chaud disposées autour de l'organe de soutien du verre.

18. Dispositif de bombage selon l'une des revendications 14 à 17, **caractérisé par** des butées de focalisation en référence par rapport à la forme supérieure de bombage.

19. Dispositif de bombage selon l'une des revendications 14 à 18, **caractérisé en ce que** la forme supérieure et la contreforme annulaire (22) sont obtenues par usinage de pièces en fonte coulée.

20. Dispositif de bombage selon l'une des revendications 14 à 19, **caractérisé en ce que** les systèmes d'indexage sont inclus dans les moules de coulée des pièces.

21. Dispositif de bombage selon l'une des revendications 14 à 20, **caractérisé par** des capteurs de mesure de l'entrefer entre la forme supérieure de bombage et la contreforme annulaire auxquels sont asservis les moyens commandant le déplacement de la contreforme annulaire.

22. Dispositif de bombage selon l'une des revendications 14 à 21, **caractérisé par** des rouleaux embarqués sur le chassis portant la contreforme annulaire.

23. Dispositif de bombage selon l'une des revendications 14 à 22, **caractérisé en ce que** le chariot est motorisé.

24. Dispositif de bombage d'une feuille de verre selon l'une des revendications 14 à 23, la forme supérieure de bombage et/ou la contreforme annulaire (22) de pressage possédant des moyens d'indexage (27) propres a garantir la concentricité de la forme supérieure de bombage et de la contreforme annulaire, **caractérisé en ce que** la forme supérieure de bombage, la contre-forme annulaire (22) et les moyens d'indexage (26, 27) sont réalisés dans des matériaux présentant des caractéristiques de comportement à chaud identiques, et sont réalisés par usinage ou par une technique donnant une précision identique à un usinage, notamment une précision inférieure au 1/10 de millimètre.

25. Dispositif selon la revendication 24, **caractérisé en ce que** l'assiette de la contre-forme annulaire est réglée au moyen de moyens de levage notamment de vis motorisées (25) en fonction de la mesure de l'entrefer entre ladite contre-forme annulaire et la forme supérieure de bombage.

26. Dispositif selon la revendication 25, **caractérisé en ce que** les capteurs d'entrefer sont des capteurs capacitifs.

27. Dispositif selon la revendication 25 ou 26, **caractérisé en ce que** la contre-forme annulaire (22) est posée de facon non rigide sur un cadre support déplacé verticalement par les moyens de levage.

28. Dispositif selon la revendication 27, **caractérisé en ce que** ledit cadre-support comporte des bras latéraux traversant les parois de la cellule de bombage, les moyens de levage actionnant ces bras à l'extérieur de la cellule.

29. Dispositif selon l'une des revendications 25 à 28, **caractérisé en ce que** les vérins sont électro-synchronisés pendant leurs grands déplacements.

30. Dispositif de bombage d'une feuille de verre selon l'une des revendications 14 à 29 comportant un four horizontal (1) terminé par une cellule de bombage (2) où est maintenue une température voisine de la température de bombage de la feuille de verre comportant une forme supérieure de bombage associée à un dispositif d'aspiration monté dans la cellule de bombage (2), **caractérisé par** une paroi d'isolation thermique (12) séparant la zone inférieure de la cellule de bombage où se trouve notamment la forme supérieure de bombage de la zone d'aspiration.

31. Dispositif de bombage selon la revendication 30, **caractérisé en ce que** la pression dans la zone d'aspiration est régulée au moyen d'une cheminée.

32. Dispositif de bombage selon la revendication 31, **caractérisé en ce que** la pression dans la zone d'aspiration est régulée par au moins un orifice de réinjection, dans la zone inférieure de la cellule de bombage, de l'air aspiré.

33. Dispositif de bombage selon la revendication 32, **caractérisé par** des moyens de chauffage de l'air aspiré réinjecté dans la zone inférieure de la cellule de bombage.

34. Dispositif selon l'une des revendications 30 à 33, **caractérisé en ce que** la zone d'aspiration est d'une largeur inférieure à la largeur de la zone inférieure de la cellule de bombage.

35. Dispositif selon la revendication 34, **caractérisé en ce que** les organes permettant de manoeuvrer la forme supérieure de bombage sont pour partie montés à l'extérieur de la cellule de bombage sur les côtés de la zone supérieure d'aspiration.

## Claims

1. Process for bending a glass sheet heated to the bending temperature in a horizontal furnace (1), which it traverses carried by a drive roller-equipped conveyor (4), which passes it into a bending cell (2), where it is maintained at an ambient temperature substantially identical to the glass sheet bending temperature, characterized in that the glass sheet is immobilized in the bending cell beneath an upper bending mould perpendicular to an annular countermould surrounding a single glass sheet supporting means, said supporting means being of a non-driving nature and acting on the central part of the glass sheet in the bending cell and characterized in that said annular countermould (22) is raised in order to press the glass sheet against the upper bending mould.

2. Process according to claim 1, characterized in that the said supporting means are constituted by rollers mounted in freely rotating manner.

3. Process according to claim 1, characterized in that said supporting means are constituted by a hot air cushion.

4. Process according to one of the preceding claims, characterized in that the annular countermould and supporting means are mounted on a plate (18) located outside the bending cell.

5. Bending process according to one of the preceding claims, characterized in that the glass sheet is displaced in the furnace in a direction perpendicular to a large side.

6. Bending process according to claim 5, characterized in that the glass sheet stoppage position is determined by lateral abutments and optionally front abutments fitted so as to be integral with the upper bending mould.

7. Bending process according to one of the preceding claims, characterized `in that the pressing assembly constituted by the upper bending mould and the bending countermould (22) is sealed during the temperature rise phases.

8. Bending process according to one of the preceding claims, characterized by a blowing of hot air in the direction of peripheral portions of the glass sheet not supported by the hot air cushion.

9. Bending process according to one of the preceding claims, characterized in that the bending process is dependent on the size of the gap between the upper bending mould and the annular countermould.

10. Bending process according to one of the preceding claims, characterized in that means are provided for rapidly extracting the plate carrying the annular countermould and the supporting means.

11. Bending process according to one of the preceding claims, characterized by an aid to the advance of the glass sheets during their displacement on the hot air cushion.

12. Bending process according to one of the preceding claims, characterized in that the supporting means are slightly inclined.

13. Bending process according to claim 11, characterized by a blowing of hot air onto the edge of the glass sheet.

14. Apparatus for bending a glass sheet having a horizontal furnace (1), which is itself provided with a drive roller-equipped conveyor (4), terminated by a bending cell (2), where the temperature is kept close to the glass sheet bending temperature, characterized in that said cell (2) has an upper bending mould equipped with means suitable for maintaining a glass sheet in contact with said upper bending mould and a lower assembly constituted by a plate (18) carrying the insulating floor of the bending cell (2), an annular, pressing countermould (22), a single glass sheet support member, which is of a non-driving nature and acts on the central part of the glass sheet in the bending cell, and a motor-driven, annular counter-mould raising-lowering system.

15. Bending apparatus according to claim 14, characterized in that the member supporting the glass in the shaping area is constituted by a refractory material slab (21) provided with a series of orifices through which is generated a hot air cushion.

16. Bending apparatus according to one of the claims 14 or 15, characterized in that said lower assembly is mounted on a carriage displaced on cold rails (17).

17. Bending apparatus according to one of the claims 14 to 16, characterized by hot air blowing means arranged around the glass support member.

18. Bending apparatus according to one of the claims 14 to 17, characterized by focussing abutments in reference with respect to the upper bending mould.

19. Bending apparatus according to one of the claims 14 to 18, characterized in that the upper mould and annular countermould (22) are obtained by machining cast metal parts.

20. Bending apparatus according to one of the claims 14 to 19, characterized in that the indexing systems are included in the moulds for casting the parts.

21. Bending apparatus according to one of the claims 14 to 20, characterized by sensors for measuring the gap between the upper bending mould and the annular countermould and on which are dependent the means controlling the displacement of the annular countermould.

22. Bending apparatus according to one of the claims 14 to 21, characterized by rollers carried by the chassis carrying the annular countermould.

23. Bending apparatus according to one of the claims 14 to 22, characterized in that the carriage is motor-driven.

24. Apparatus for bending a glass sheet according to one of the claims 14 to 23, the upper bending mould and/or the annular pressing mould (22) having indexing means (27) able to guarantee the concentricity of the upper bending mould and the annular countermould, characterized in that the upper bending mould, the annular countermould (22) and the indexing means (26, 27) are made from materials having identical heat behaviour characteristics and are produced by machining or a procedure giving a precision identical to machining, in particular a precision lower than 1/10 mm.

25. Apparatus according to claim 24, characterized in that the seating of the annular countermould is regulated by lifting means, particularly motor-driven screws (24), as a function of the measurement of the gap between said annular countermould and the upper bending mould.

26. Apparatus according to claim 25, characterized in that the gap sensors are capacitive sensors.

27. Apparatus according to claim 25 or 26, characterized in that the annular countermould (22) is non-rigidly placed on a support frame vertically displaced by lifting means.

28. Apparatus according to claim 27, characterized in that the support frame has lateral arms traversing the walls of the bending cell, lifting means actuating said arms outside the cell.

29. Apparatus according to one of the claims 25 to 28, characterized in that the jacks are electro-synchronized during their large displacements.

30. Apparatus for bending a glass sheet according to one of the claims 14 to 29 having a horizontal furnace (1) terminated by a bending cell (2), in which is maintained a temperature close to the glass sheet bending temperature and having an upper bending mould associated with a suction device installed in the bending cell (2), characterized by a thermal insulation wall (12) separating the lower area of the bending cell where the upper bending mould is located, from the suction area.

31. Bending apparatus according to claim 30, characterized in that the pressure in the suction area is regulated by means of a vent.

32. Bending apparatus according to claim 31, characterized in that the pressure in the suction area is regulated by at least one orifice for the reinjection of the sucked out air into the lower area of the bending cell.

33. Bending apparatus according to claim 32, characterized by means for heating the sucked air reinjected into the lower area of the bending cell.

34. Apparatus according to one of the claims 30 to 33, characterized in that the suction area has a width less than the width of the lower area of the bending cell.

35. Apparatus according to claim 34, characterized in that the members making it possible to manipulate the upper bending mould are in part installed outside the bending cell on the sides of the upper suction area.

## Patentansprüche

1. Verfahren zum Biegen einer Glasscheibe, die in einem Horizontalofen (1) auf Biegetemperatur erhitzt worden ist, den sie durchläuft, von einem Förderer mit angetriebenen Rollen (4) transportiert, der sie in eine Biegezelle (2) bringt, worin eine Umgebungstemperatur aufrechterhalten wird, die im wesentlichen gleich der Biegetemperatur der Glasscheibe ist, **dadurch gekennzeichnet, daß** die Glasscheibe in der Biegezelle unter einer oberen Biegeform senkrecht zu einer ringförmigen Gegenform arretiert wird, die ein einziges Tragmittel für die Glasscheibe umgibt, das nicht angetrieben ist und auf den zentralen Bereich der Glasscheibe in der Biegezelle einwirkt, **und dadurch gekennzeichnet, daß** die ringförmige Gegenform (22) angehoben wird, um die Glasscheibe an die obere Biegeform zu pressen.

2. Verfahren nach Anspruch 1, **dadurch gekennzeichnet, daß** die Tragmittel aus frei drehbar angebrachten Rollen bestehen.

3. Verfahren nach Anspruch 1, **dadurch gekennzeichnet, daß** die Tragmittel aus einem Heißluftkissen bestehen.

4. Verfahren nach einem der vorhergehenden Ansprüche, **dadurch gekennzeichnet, daß** die ringförmige Gegenform und die Tragmittel auf einer außerhalb der Biegezelle angeordneten Grundplatte (18) angebracht sind.

5. Biegeverfahren nach einem der vorhergehenden Ansprüche, **dadurch gekennzeichnet, daß** die Glasscheibe in einer zu einer langen Seite querstehenden Richtung im Ofen bewegt wird.

6. Biegeverfahren nach Anspruch 5, **dadurch gekennzeichnet, daß** die Halteposition der Glasscheibe von seitlichen und gegebenenfalls von vorderen Anschlägen bestimmt wird, die fest an der oberen Biegeform angebracht sind.

7. Biegeverfahren nach einem der vorhergehenden Ansprüche, **dadurch gekennzeichnet, daß** die aus der oberen Biegeform und der Gegenbiegeform (22) bestehende Preßeinheit während der Phasen der Temperaturerhöhung geschlossen ist.

8. Biegeverfahren nach einem der vorhergehenden Ansprüche, **dadurch gekennzeichnet, daß** Heißluft in Richtung der Umfangsbereiche der Glasscheibe, die nicht vom Heißluftkissen getragen werden, geblasen wird.

9. Biegeverfahren nach einem der vorhergehenden Ansprüche, **dadurch gekennzeichnet, daß** die Biegepresse nach der Messung des Luftspalts zwischen oberer Biegeform und ringförmiger Gegenform gesteuert wird.

10. Biegeverfahren nach einem der vorhergehenden Ansprüche, **dadurch gekennzeichnet, daß** Mittel vorgesehen sind, um die Grundplatte, welche die ringförmige Gegenform und die Tragmittel trägt, schnell herauszuziehen.

11. Biegeverfahren nach einem der vorhergehenden Ansprüche, **dadurch gekennzeichnet, daß** eine Unterstützung für den Weitertransport der Glasscheiben während ihrer Bewegung auf dem Heißluftkissen vorhanden ist.

12. Biegeverfahren nach einem der vorhergehenden Ansprüche, **dadurch gekennzeichnet, daß** die Tragmittel leicht geneigt sind.

13. Biegeverfahren nach Anspruch 11, **dadurch gekennzeichnet, daß** auf den Rand der Glasscheibe Heißluft geblasen wird.

14. Vorrichtung zum Biegen einer Glasscheibe, welche einen Horizontalofen (1) umfaßt, der seinerseits einen Förderer mit angetriebenen Rollen (4) enthält und von einer Biegezelle (2) abgeschlossen wird, worin eine Temperatur nahe der Biegetemperatur der Glasscheibe aufrechterhalten wird, **dadurch gekennzeichnet, daß** diese Zelle (2) eine obere Biegeform, die mit geeigneten Mitteln versehen ist, um eine Glasscheibe im Kontakt mit der oberen Biegeform zu halten, und eine untere Einheit enthält, welche aus einer Grundplatte (18) besteht, die den Isolierboden der Biegezelle (2), eine ringförmige Gegenpreßform (22), ein einziges Haltemittel für die Glasscheibe, wobei dieses Mittel nicht angetrieben wird und auf den zentralen Bereich der Glasscheibe in der Biegezelle einwirkt, und ein motorgetriebenes Hub-Senk-System für die ringförmige Gegenform trägt.

15. Biegevorrichtung nach Anspruch 14, **dadurch gekennzeichnet**, **daß** das Tragmittel für die Glasscheibe in der Formgebungszone aus einer Stützplatte (21) aus hitzebeständigem Material besteht, die mit einer Reihe von Öffnungen durchbohrt ist, durch welche hindurch ein Heißluftkissen erzeugt wird.

16. Biegevorrichtung nach Anspruch 14 oder 15, **dadurch gekennzeichnet, daß** die untere Einheit auf einem Wagen angebracht ist, der auf kalten Schienen (17) bewegt wird.

17. Biegevorrichtung nach einem der Ansprüche 14 bis 16, **dadurch gekennzeichnet, daß** um das Tragmittel für die Glasscheibe herum Blasdüsenreihen für Heißluft angeordnet sind.

18. Biegevorrichtung nach einem der Ansprüche 14 bis 17, **gekennzeichnet durch** Anschläge zum Positionieren gegenüber der oberen Biegeform und in bezug auf diese.

19. Biegevorrichtung nach einem der Ansprüche 14 bis 18, **dadurch gekennzeichnet, daß** die obere Biegeform und die ringförmige Gegenform (22) durch spanabhebende Bearbeitung von Gußeisenteilen erhalten werden.

20. Biegevorrichtung nach einem der Ansprüche 14 bis 19, **dadurch gekennzeichnet, daß** in den Gießformen für die Teile Rastsysteme enthalten sind.

21. Biegevorrichtung nach einem der Ansprüche 14 bis 20, **gekennzeichnet durch** Sensoren zur Messung des Luftspalts zwischen der oberen Biegeform und der ringförmigen Gegenform, von welchen die Mittel geregelt werden, die die Bewegung der ringförmigen Gegenform steuern.

22. Biegevorrichtung nach einem der Ansprüche 14 bis 21, **gekennzeichnet durch** Rollen, die auf dem Rahmen angebracht sind, der die ringförmige Gegenform trägt.

23. Biegevorrichtung nach einem der Ansprüche 14 bis 22, **dadurch gekennzeichnet daß** der Wagen motorgetrieben ist.

24. Biegevorrichtung für eine Glasscheibe nach einem der Ansprüche 14 bis 23, worin die obere Biegeform und/oder die ringförmige Gegenpreßform (22) Rastmittel (27) besitzt/besitzen, die geeignet sind, die Konzentrizität von oberer Biegeform und ringförmiger Gegenform sicherzustellen, **dadurch gekennzeichnet, daß** die obere Biegeform, die ringförmige Gegenform (22) und die Rastmittel (26, 27) aus Materialien, die sich in der Wärme gleich verhalten, und durch spanabhebende Bearbeitung oder ein Verfahren, das dieselbe Genauigkeit wie eine spanabhebende Bearbeitung, insbesondere eine größere Genauigkeit als 1/10 Millimeter, ergibt, hergestellt sind.

25. Vorrichtung nach Anspruch 24, **dadurch gekennzeichnet daß** die Position der ringförmigen Gegenform durch Hebemittel, insbesondere motorgetriebene Schrauben (25) in Abhängigkeit von der Messung des Luftspalts zwischen ringförmiger Gegenform und oberer Biegeform geregelt wird.

26. Vorrichtung nach Anspruch 25, **dadurch gekennzeichnet daß** die Sensoren für den Luftspalt kapazitive Sensoren sind.

27. Vorrichtung nach Anspruch 25 oder 26, **dadurch gekennzeichnet, daß** die ringförmige Gegenform (22) nicht starr auf einem Tragrahmen angeordnet ist, der von Hebemitteln vertikal bewegt wird.

28. Vorrichtung nach Anspruch 27, **dadurch gekennzeichnet, daß** der Tragrahmen Seitenarme enthält, die durch die Wände der Biegezelle führen, wobei die Hebemittel auf diese Arme außerhalb der Zelle einwirken.

29. Vorrichtung nach einem der Ansprüche 25 bis 28, **dadurch gekennzeichnet, daß** die Hydraulikzylinder bei ihren großen Bewegungen elektrosynchronisiert sind.

30. Vorrichtung zum Biegen einer Glasscheibe nach einem der Ansprüche 14 bis 29, welche einen Horizontalofen (1) umfaßt, der von einer Biegezelle (2) abgeschlossen wird, worin eine Temperatur nahe der Biegetemperatur der Glasscheibe aufrechterhalten wird und welche eine obere Biegeform enthält, die mit einer in der Biegezelle (2) angebrachten Ansaugeinrichtung verbunden ist, **gekennzeichnet durch** eine Wärmeisolierwand (12), welche die untere Zone der Biegezelle, worin sich insbesondere die obere Biegeform befindet, von der Ansaugzone trennt.

31. Biegevorrichtung nach Anspruch 30, **dadurch gekennzeichnet, daß** der Druck in der Ansaugzone mittels eines Abzugs geregelt wird.

32. Biegevorrichtung nach Anspruch 31, **dadurch gekennzeichnet, daß** der Druck in der Ansaugzone durch mindestens eine Öffnung zum Wiedereinblasen von abgesaugter Luft in die untere Zone der Biegezelle geregelt wird.

33. Biegevorrichtung nach Anspruch 32, **gekennzeichnet durch** Mittel zum Erwärmen der abgesaugten Luft, die wieder in die untere Zone der Biegezelle eingeblasen wird.

34. Vorrichtung nach einem der Ansprüche 30 bis 33, **dadurch gekennzeichnet, daß** die Größe der Ansaugzone kleiner als die Größe der unteren Zone der Biegezelle ist.

35. Vorrichtung nach Anspruch 34, **dadurch gekennzeichnet, daß** die Mittel, welche die Betätigung der oberen Biegeform ermöglichen, teilweise außerhalb der Biegezelle an den Seiten der oberen Ansaugzone angebracht sind.
